# FASCICULE DE BREVET EUROPEEN

(11) **EP 1 221 247 B1**
(45) Date de publication et mention de la délivrance du brevet: **12.01.2005**
(21) Numéro de dépôt: 00968039.8
(22) Date de dépôt: 13.10.2000
(51) Int. Cl.: H04M 3/493

(54) **PROCEDE DE MISE EN COMMUNICATION TELEPHONIQUE PAR COMMANDE VOCALE ET SERVEUR VOCAL CORRESPONDANT**
SPRACHEGESTEUERTE ANRUFVERFAHREN UND ENTSPRECHENDE ANBIETER
METHOD FOR ESTABLISHING A TELEPHONE CONNECTION BY VOICE CONTROL AND CORRESPONDING VOICE SERVER

(30) Priorité: 14.10.1999 FR 9912820
(43) Date de publication de la demande: 10.07.2002
(73) Titulaire: FRANCE TELECOM, 75015 Paris (FR)
(72) Inventeur: CHARPENTIER, Francis, F-22660 Trelevern (FR); SORIN, Christel, NEW YORK NY 10009 (US); JOUVET, Denis, F-2230 0 Lannion (FR); OLLIER, Laurent, F-22300 Lannion (FR); FOURNIER, Marc, F-22300 Lannion (FR)
(74) Mandataire: Poulin, Gérard
(86) Numéro de dépôt international: PCT/FR2000/002860
(87) Numéro de publication internationale: WO 2001/028209

(56) Documents cités:
- EP-A- 0 800 304
- EP-A- 0 823 809
- US-A- 5 835 570

## Description

### Domaine technique

La présente invention a pour objet un procédé de mise en communication téléphonique par commande vocale et un serveur vocal correspondant.

### Etat de la technique antérieure

Pour faciliter l'établissement de communications téléphoniques en permettant à l'utilisateur de s'affranchir de la numérotation au clavier, plusieurs solutions sont étudiées par différents laboratoires et acteurs dans le domaine des télécommunications.

L'article de R. BILLI et al. intitulé "Automation of Telecom Italia Directory Assistance Service : Field Trial Results" publié dans "Proceedings of IVTTA 98", pp. 11-16, Torino, Italy, 1998, décrit un annuaire entièrement automatique avec débordement sur opérateur en cas de problème. Dans ce système, l'abonné est invité à fournir d'abord le nom de la région visée, puis le nom de la ville, la rue, puis le nom et le prénom du correspondant recherché. L'annuaire vocal est restreint aux correspondants d'une même ville. Si le correspondant n'est pas répertorié dans cet annuaire, la demande est basculée sur un service ordinaire avec opérateur.

Le brevet US-A-5,835,570 décrit un annuaire téléphonique vocal personnel obtenu par rapatriement du numéro de téléphone contenu dans l'annuaire public. Le répertoire vocal est fondé sur une technique d'étiquettes vocales, dont la définition est donnée par l'utilisateur lui-même et qu'il enregistre avec sa propre voix. Les données rapatriées de l'annuaire public sont uniquement celles qui correspondent au numéro de téléphone et c'est l'étiquette vocale définie par l'utilisateur qui sert de base au modèle de reconnaissance vocale personnel. Il est prévu, en outre, une mise à jour de l'annuaire personnel mais seulement sur les appels provenant de l'utilisateur (appels sortants). Les numéros de téléphone stockés dans l'annuaire personnel ne sont pas mis à jour en cas de modification des données de l'annuaire public (en cas de déménagement du correspondant, etc ...).

Cette technique présente donc des performances assez limitées.

La présente invention a justement pour but de proposer une technique plus élaborée qui permet une mise à jour complète de l'annuaire personnel de l'utilisateur, tout en conservant un même type de dialogue entre, d'une part, l'utilisateur et, d'autre part, son annuaire personnalisé ou l'annuaire public.

### Exposé de l'invention

A cette fin, l'invention propose un procédé de mise en communication téléphonique par commande vocale, d'un abonné demandeur avec un correspondant demandé appartenant à un ensemble de correspondants répertoriés dans un annuaire vocal public, dans lequel la communication entre l'abonné demandeur et le correspondant demandé est établie par un serveur vocal, ce procédé étant caractérisé en ce que :
- on constitue, dans le serveur vocal, et pour chaque abonné, d'une part, un annuaire personnalisé que l'on obtient par extraction de l'annuaire vocal public de toutes les informations concernant les correspondants connus de l'abonné, et, d'autre part, associé à chaque annuaire personnalisé, un modèle de reconnaissance vocale,
- on met à jour continuellement chaque annuaire personnalisé et son modèle de reconnaissance vocale associé en fonction des appels entrants et sortants de l'abonné correspondant, ou des numéros communiqués par l'abonné comme devant être ajoutés ou supprimés de son annuaire personnalisé,
- on met à jour les informations relatives à chaque correspondant contenu dans chaque annuaire personnalisé en fonction de l'évolution des informations relatives à ce correspondant contenues dans l'annuaire public.

La présente invention a également pour objet un serveur vocal mettant en oeuvre ce procédé. Le serveur vocal comprend :
- une pluralité d'annuaires personnalisés avec leurs modèles de reconnaissance vocale associés, chaque annuaire personnalisé étant affecté à un abonné particulier,
- une liaison permanente à un annuaire public,
- des modèles de reconnaissance associés à cet annuaire public,
- des moyens pour faire évoluer chaque annuaire personnalisé continuellement en fonction des appels entrants et sortants de l'abonné correspondant, ou des numéros communiqués par l'abonné comme devant être ajoutés ou supprimés,
- des moyens pour mettre à jour chaque annuaire personnalisé, relativement à chaque correspondant qu'il contient, en fonction de l'évolution des informations relatives à ce correspondant contenues dans l'annuaire public.

### Brève description des dessins

La figure unique annexée est un schéma synoptique illustrant le procédé de l'invention et la structure du serveur vocal.

### Description détaillée de modes particulier de mise en oeuvre

Dans la suite, on entend :
- par annuaire vocal personnalisé :
   - soit un annuaire vocal propre à un individu ; cet annuaire rassemble une liste de correspondants propres à l'individu,
   - soit un annuaire vocal lié à une personne morale comme une société ; une entreprise, une association, etc... cet annuaire rassemble la liste des personnes travaillant au sein de la personne morale et une liste de correspondants propre à la personne morale ;
- par annuaire vocal public, un annuaire global de tous les abonnés d'un opérateur de télécommunications, voire de plusieurs opérateurs de télécommunications opérant sur un même domaine géographique (limité à une région, à un pays, à un ensemble de pays), ou même opérant dans le monde entier. Cet annuaire comprend en particulier les "pages blanches" et les "pages jaunes".

Selon l'invention, un annuaire vocal personnalisé est construit comme un annuaire vocal de grande capacité, mais avec à une partie restreinte des données de l'annuaire vocal public. C'est donc un annuaire "restreint". Ce concept se justifie par le fait que l'ensemble des numéros réellement utilisés par un abonné ne dépasse pas un nombre limité, quelques milliers tout au plus et très probablement moins d'un millier pour la plupart des individus. Pour une entreprise, le nombre est plus grand, et il croîtra en fonction de la taille de l'entreprise. Mais il restera également limité et largement inférieur aux nombres d'abonnés figurant dans l'annuaire public. Le fait que l'annuaire restreint soit beaucoup plus petit que l'annuaire public accroît la faisabilité technique du service d'annuaire vocal, parce que la reconnaissance vocale porte sur un vocabulaire beaucoup plus limité que dans le cas de l'annuaire public. Cette faisabilité améliorée est exploitée en particulier pour offrir une ergonomie simple et agréable à l'utilisateur.

L'invention offre un service de mise en relation à deux niveaux, articulant un premier niveau d'annuaire personnalisé (individu, entreprise, communauté) de grande capacité (pouvant contenir jusqu'à plusieurs milliers de mots), et un deuxième niveau d'annuaire public entièrement automatisé. Dans la majorité des cas, l'utilisateur n'accédera qu'au premier niveau, car il demandera la communication avec des correspondants qu'il a déjà appelés ou qui l'ont déjà appelé, et il n'utilisera le deuxième niveau que pour les correspondants qu'il n'a jamais appelés ou qui ne l'ont jamais appelé, en extrayant un nouveau numéro de l'annuaire public. En d'autres termes, l'abonné utilise presque toujours les numéros stockés dans son journal des appels -appels sortants et appels sortants- journal qui peut exister depuis une date de début (pouvant être éventuellement sa date de naissance).

A titre explicatif, des exemples de taille pour les annuaires mis en jeu sont les suivants :
- l'annuaire public comporte plusieurs dizaines de millions d'abonnés,
- l'annuaire personnalisé est limité à l'ensemble des correspondants, soit quelques milliers pour un individu ; et pouvant aller jusqu'à des dizaines de milliers, pour des personnes morales telles que les grandes entreprises.

Un aspect important du service offert par l'invention est que le même dialogue est proposé, dans les deux niveaux. Il est plus court dans le cas de l'annuaire personnalisé (parce que le système trouve la solution plus rapidement), que dans le cas d'une recherche dans l'annuaire public. Le passage de l'un à l'autre est marqué par un message du genre :
"vous n'avez jamais appelé ce correspondant, je passe à une recherche dans l'annuaire complet".

A titre explicatif, quelques exemples de dialogues peuvent être donnés. La lettre SV symbolise le serveur vocal et la lettre U l'utilisateur :

### Exemple 1 : utilisation de l'annuaire personnalisé

- SV :: Annuaire vocal personnel. Qui voulez-vous ?
- U :: <Prénom et nom d'un correspondant listé dans l'annuaire personnalisé listé>
- SV :: Confirmation du nom. Je vous mets en relation.

### Exemple 2 : utilisation de l'annuaire personnalisé

- SV :: Annuaire vocal personnel. Qui voulez-vous ?
- U :: <Prénom et nom d'un correspondant listé dans l'annuaire personnalisé>
- SV :: Connaissez-vous la ville ?
- U :: Oui. <Nom de la localité>
- SV :: Confirmation du nom et de la localité. Je vous mets en relation.

### Exemple 3 : utilisation de l'annuaire public

- SV :: Annuaire vocal personnel. Qui voulez-vous ?
- U :: <Prénom et nom d'un correspondant non listé dans l'annuaire personnalisé>
- SV :: Connaissez-vous la ville ?
- U :: <Oui. Nom de la localité>
- SV :: Vous n'avez jamais appelé ce correspondant. Je passe à une recherche dans l'annuaire complet. Pouvez-vous épeler le nom de famille ?
- U :: Oui.<Epellation>
- SV :: S'agit-t-il de "nom" demeurant à "localité" ?
- U :: Oui, sans doute.
- SV :: Voulez-vous la mise en relation ?
- U :: Oui

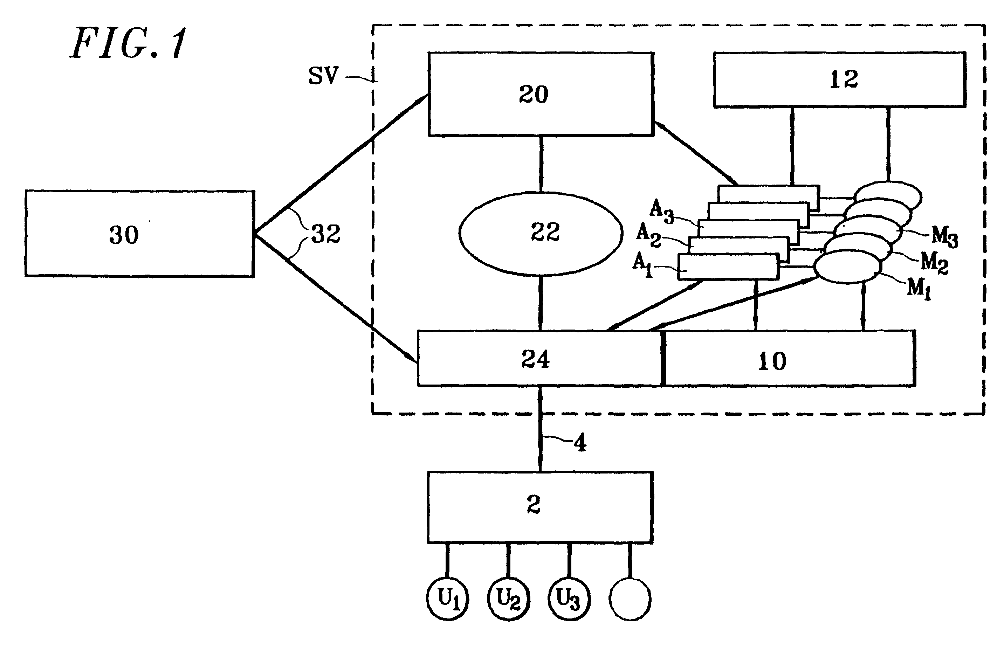

La figure 1 montre une architecture possible du système et plus particulièrement du serveur vocal. Les utilisateurs U₁, U₂, U₃, ... communiquent avec le serveur vocal SV par un commutateur local 2 et une liaison téléphonique 4. Tel que représenté le serveur vocal SV comprend des annuaires personnalisés A₁, A₂, A₃, ... associés à des modèles de reconnaissance vocale M₁, M₂, M₃, ..., un module 10 d'application de dialogue vocal relié aux annuaires personnalisés et aux modèles de reconnaissance vocale, un module 12 de mise à jour des modèles de reconnaissance vocale à partir des données écrites. Le serveur vocal comprend encore un module 20 de mise à jour des annuaires personnalisés et de mise en cohérence avec l'annuaire public, un ensemble 22 des modèles vocaux correspondant à l'annuaire public, un module 24 d'application de dialogue vocal d'accès à l'annuaire public. L'ensemble représenté comprend encore un annuaire public 30 relié au serveur vocal par une liaison de données 32.

Cet ensemble fonctionne de la manière suivante :
■ l'abonné entre en contact avec le serveur vocal, et il est pris en charge par un premier niveau de dialogue gérant l'accès à son annuaire personnalisé ; les données utilisées sont l'annuaire personnalisé constitué par un extrait de l'annuaire public, et le modèle de reconnaissance vocale correspondant,
■ si le nom et les coordonnées du correspondant sont reconnus à ce niveau, le serveur vocal établit la mise en relation par routage de l'appel vers le correspondant (par contrôle du commutateur en mode "service node" ou via le réseau intelligent en mode périphérique intelligent),
■ si le nom et les coordonnées du correspondant ne sont pas trouvés, le dialogue est pris en charge par un deuxième niveau de dialogue, qui gère l'accès à l'annuaire public ; les données utilisées sont l'annuaire public (via la liaison) et le modèle vocal correspondant, qui est dans le serveur,
■ si le nom et les coordonnées du correspondant sont reconnus à ce niveau, le serveur vocal établit la mise en relation par routage de l'appel vers le correspondant (par contrôle du commutateur en mode "service node", ou via le réseau intelligent en mode périphérique intelligent), et l'annuaire personnalisé est mis à jour, ainsi que son modèle de reconnaissance vocale associé,
■ en cas d'échec persistant l'abonné est mis en communication avec un opérateur humain sur un centre d'appel.

La mise à jour des données de l'annuaire personnalisé du serveur vocal permet la mise en cohérence avec l'annuaire public des données suivantes :
- les annuaires personnalisés pour chacun des abonnés au service,
- les modèles de reconnaissance vocale associés aux annuaires personnalisés,
- le modèle de reconnaissance vocale de l'annuaire public.

Ce processus comprend une fonction de journal des appels, appels émis par l'utilisateur soit par le service d'annuaire vocal lui-même, soit par une méthode classique (composition de numéro au clavier ou en vocal), mais aussi des appels reçus par l'utilisateur. L'annuaire est mis à jour chaque fois que le journal des appels détecte un nouveau correspondant qui n'est pas déjà présent dans l'annuaire.

Enfin, il est possible d'initialiser ou d'enrichir un annuaire personnalisé à partir d'annuaires prédéfinis (proposés par l'opérateur de télécommunications par exemple), ou par héritage d'annuaires d'autres personnes (des parents par exemple), sous réserve de l'accord explicite de ces autres personnes.

L'annuaire personnalisé est par essence un annuaire en constante augmentation, mais le mécanisme de mise à jour peut inclure des mécanismes de destruction des entrées inutiles, selon des critères variés. Par exemple, tout numéro qui n'a pas été rappelé pendant une période de plus d'une durée prédéfinie est détruit ; pour un individu, la durée pourra être plus longue que pour une entreprise. Ce mécanisme est paramétrable au niveau de la gestion des abonnés au service.

La structure des annuaires personnalisés est dérivée de la structure de l'annuaire public, par extraction de toutes (ou d'une partie des entrées des correspondants passés de l'abonné, en utilisant toutes (ou partie) des champs de la base de donnés de l'annuaire public. Les champs obligatoirement présents sont : prénom, nom, localité, adresse, département, numéro de téléphone. Comme il s'agit d'un service de mise en communication sans recours aux numéros de téléphone (service de type "numéro-libre" ou "numberless dialing" en anglais), le numéro joue un rôle d'adresse interne, que l'abonné a priori n'a pas besoin de connaître.

Le système de l'invention peut utiliser, pour le module de mise à jour des modèles de reconnaissance vocale, des logiciels bien connus de l'homme de l'art, comme par exemple le "module de reconnaissance flexible" de la technologie de reconnaissance vocale PHIL90 et PHILSOFT développée par FRANCE TELECOM, et commercialisé par ALCATEL TITN ANSWARE, MG2 Technologies, HOLISTIQUE COMMUNICATION.

Le principe de ces modules est de convertir des mots ou des expressions à reconnaître, données sous forme écrite, généralement orthographique, ou phonétique dans certains cas, en un ensemble de données informatiques, ensemble appelé modèle de reconnaissance vocale, qui permet à un système de reconnaissance vocale de reconnaître ces mots ou expressions. Ce module comprend un module de phonétisation des données écrites, qui convertit des mots ou expressions donnés sous forme orthographique en une description phonétique, un module d'assemblage du modèle de reconnaissance à partir de la description phonétique et de la grammaire souhaitée pour les énoncés vocaux, et les modèles vocaux élémentaires pour chaque phonème de la langue. Ces modules de reconnaissance flexible sont évidemment dépendants de la langue.

Les applications de dialogue vocal peuvent être réalisées par des techniques et des produits connus, par exemple les générateurs et moniteurs d'applications vocales proposées par MG2 Technologies. Un outil appelé générateur d'application vocale permet de décrire les échanges vocaux entre le serveur vocal et l'utilisateur. Cet outil offre au concepteur de l'application vocale une interface graphique ou bien un langage informatique de haut niveau (langage de script). Cet outil permet ensuite de compiler l'application vocale en une forme "run-time", exécutée par un moniteur d'applications vocales. Les applications vocales peuvent également être réalisées sans le recours à un générateur d'application, par un simple programme informatique décrivant tous les cas d'interaction entre le serveur vocal et l'utilisateur.

## Revendications

1. Procédé de mise en communication téléphonique par commande vocale, d'un abonné demandeur avec un correspondant demandé appartenant à un ensemble de correspondants répertoriés dans un annuaire vocal public, procédé dans lequel la communication entre l'abonné demandeur et le correspondant demandé est établie par un serveur vocal, ce procédé comprenant les étapes suivantes:
- on constitue, dans le serveur vocal, et pour chaque abonné, d'une part, un annuaire personnalisé que l'on obtient par extraction de l'annuaire vocal public de toutes les informations concernant les correspondants connus de l'abonné, et, d'autre part, associé à chaque annuaire personnalisé, un modèle de reconnaissance vocale, **caractérisé en ce que**
- l'on met à jour continuellement chaque annuaire personnalisé et son modèle de reconnaissance vocale associé en fonction des appels entrants et sortants de l'abonné correspondant, ou des numéros communiqués par l'abonné comme devant être ajoutés ou supprimés de son annuaire personnalisé, et que
- l'on met à jour les informations relatives à chaque correspondant contenu dans chaque annuaire personnalisé en fonction de l'évolution des informations relatives à ce correspondant contenues dans l'annuaire public.

2. Procédé selon la revendication 1, dans lequel on traite la demande d'un abonné, dans un premier temps, dans l'annuaire personnalisé correspondant à cet abonné, et, dans un deuxième temps, et si le correspondant demandé ne figure pas dans l'annuaire personnalisé de l'abonné, dans l'annuaire public.

3. Procédé selon la revendication 2, dans lequel on utilise le même type de dialogue entre, d'une part, l'abonné et, d'autre part, l'annuaire personnalisé ou l'annuaire public.

4. Procédé selon la revendication 1, dans lequel les annuaires personnalisés sont affectés à des abonnés personnes physiques.

5. Procédé selon la revendication 1, dans lequel les annuaires personnalisés sont affectés à des abonnés personnes morales.

6. Serveur vocal (SV) pour mise en communication téléphonique par commande vocale, ce serveur mettant en oeuvre toutes les étapes du procédé de la revendication 1, le serveur vocal comprenant:
- une pluralité d'annuaires personnalisés (A₁, A₂, A₃, ...) avec leurs modèles de reconnaissance vocale associés (M₁, M₂, M₃, ...), chaque annuaire personnalisé étant affecté à un abonné particulier (U₁, U₂, U₃, ...),
- une liaison (32) permanente à un annuaire public (30),
- des modèles (22) de reconnaissance associés à cet annuaire public (20), **caractérisé en ce que** le serveur vocal comprend:
- des moyens (12) pour faire évoluer chaque annuaire personnalisé (A₁, A₂, A₃, ... ) continuellement en fonction des appels entrants et sortants de l'abonné correspondant (U₁, U₂, U₃, ...), ou des numéros communiqués par l'abonné comme devant être ajoutés ou supprimés,
- des moyens (20) pour mettre à jour chaque annuaire personnalisé (A₁, A₂, A₃, ...), relativement à chaque correspondant, en fonction de l'évolution des informations relatives à ce correspondant contenues dans l'annuaire public (30).

7. Serveur vocal selon la revendication 6, dans lequel chaque annuaire personnalisé (A₁, A₂, A₃, ...) est affecté à un abonné personne physique (U₁, U₂, U₃, ...) .

8. Serveur vocal selon la revendication 6, dans lequel chaque annuaire personnalisé (A₁, A₂, A₃, ...) est affecté à un abonné personne morale (U₁, U₂, U₃, ...).

## Patentansprüche

1. Sprachgesteuertes Anrufverfahren, von einem anrufenden Teilnehmer mit einem angerufenen Teilnehmer, der zu einer Gesamtheit von Teilnehmern gehört, die in einem öffentlichen Sprachtelefonbuch verzeichnet sind, das durchgeführt wird, indem die Kommunikation zwischen dem anrufenden Teilnehmer und dem angerufenen Teilnehmer durch einen Sprachanbieter eingerichtet wird, wobei dieses Verfahren die nachfolgenden Schritte umfaßt:
- Einerseits für jeden Teilnehmer Anlegen eines personalisierten Telefonbuchs im Sprachanbieter, das durch Auszug aus dem öffentlichen Sprachtelefonbuch aus den gesamten Informationen bezüglich der Teilnehmer, die der Teilnehmer kennt, erhalten wird, und andererseits Verknüpfen eines Spracherkennungsmodells mit jedem personalisierten Telefonbuch, **dadurch gekennzeichnet, dass**
- kontinuierlich jedes personalisierte Telefonbuch und sein Spracherkennungsmodell, entsprechend den eingehenden und ausgehenden Anrufen des anrufenden Teilnehmers, verknüpft und auf den aktuellen Stand gebracht werden oder die wie vorher vom Teilnehmer mitgeteilten Nummern in seinem personalisierten Telefonbuch zugefügt oder weggelassen werden, und dass
- die Informationen entsprechend jedem Teilnehmer, die in jedem personalisierten Telefonbuch bekannt sind, entsprechend der Informationsentwicklung, bezogen auf diesen im öffentlichen Telefonbuch bekannten Teilnehmer auf den aktuellen Stand gebracht werden.

2. Verfahren nach Anspruch 1, in dem der Anruf eines Teilnehmers in einem ersten Fall im personalisierten Telefonbuch entsprechend diesem Teilnehmer und in einem zweiten Fall, wenn der anrufende Teilnehmer nicht im personalisierten Telefonbuch des Teilnehmers verzeichnet ist, im öffentlichen Telefonbuch bearbeitet wird.

3. Verfahren nach Anspruch 2, in dem man denselben Dialogtyp zwischen einerseits dem Teilnehmer und andererseits dem personalisierten Telefonbuch oder dem öffentlichen Telefonbuch verwendet.

4. Verfahren nach Anspruch 1, in dem die personalisierten Telefonbücher natürlichen Personen als Teilnehmer zugewiesen werden.

5. Verfahren nach Anspruch 1, in dem die personalisierten Telefonbücher juristischen Personen als Teilnehmer zugewiesen werden.

6. Sprachanbieter (Server vocal SV) für sprachgesteuerte Anrufverfahren, wobei dieser Anbieter die gesamten Schritte des Verfahrens des Anspruchs 1 umsetzt, und der Sprachanbieter umfaßt:
- eine Vielzahl von personalisierten Telefonbüchern (A₁, A₂, A₃,...) mit ihren damit verbundenen Spracherkennungsmodellen (M₁, M₂, M₃,...), wobei jedes personalisierte Telefonbuch einem speziellen Teilnehmer zugewiesen ist (U₁, U₂, U₃,...),
- eine permanente Verbindung (32) mit einem öffentlichen Telefonbuch (30),
- mit diesem öffentlichen Telefonbuch (20) verbundene Erkennungsmodelle (22), **dadurch gekennzeichnet, dass** der Anbieter umfaßt:
- Mittel (12) zum kontinuierlichen Ändern jedes personalisierten Telefonbuchs (A₁, A₂, A₃,...) entsprechend den eingehenden und ausgehenden Anrufen eines anrufenden Teilnehmers (U₁, U₂, U₃,...) oder die wie vorher vom Teilnehmer übermittelten Nummern hinzugefügt oder weggelassen werden,
- Mittel (20), um jedes personalisierte Telefonbuch (A₁, A₂, A₃, ...), bezogen auf jeden Teilnehmer, entsprechend.der Informationsentwicklung, bezogen auf diesen im öffentlichen Telefonbuch (30) enthaltenen Teilnehmer auf den aktuellen Stand zu bringen.

7. Sprachanbieter nach Anspruch 6, in dem jedes personalisierte Telefonbuch (A₁, A₂, A₃,...) einer natürlichen Person als Teilnehmer (U₁, U₂, U₃,...) zugewiesen wird.

8. Sprachanbieter nach Anspruch 6, in dem jedes persönliche Telefonbuch (A₁, A₂, A₃,...) einer juristischen Person als Teilnehmer (U₁, U₂, U₃,...) zugewiesen wird.

## Claims

1. Voice-activated telephone call connection method, of a requesting subscriber with a requested party belonging to a set of parties listed in a public voice directory, wherein the call between the requesting subscriber and the requested party is connected by a voice server, said method comprising the following stages:
- in the voice server, and for each subscriber, firstly, a customised directory is created which is obtained by extracting from the public voice directory all the information relating to the parties known to the subscriber, and, secondly, a voice recognition pattern associated with each customised directory is created, **characterized in that**
- each customised directory and its associated recognition pattern are continually updated according to the corresponding subscriber's incoming and outgoing calls, or numbers indicated by the subscriber to be added to or deleted from their customised directory and that
- the data relating to each party contained in each customised directory is updated according to changes in the data relating to said party contained in the public directory.

2. Method according to claim 1, wherein the subscriber's request is processed, firstly, in the customised directory corresponding to said subscriber, and, secondly, if the requested party is not contained in the subscriber's customised directory, in the public directory.

3. Method according to claim 2, wherein the same type of dialogue is used between the subscriber the customised or public directory.

4. Method according to claim 1, wherein the customised directories are assigned to individual subscribers.

5. Method according to claim 1, wherein the customised directories are assigned to legal entity subscribers.

6. Voice server (SV) for voice-activated telephone call connection, said server implementing all the stages of the method according to claim 1, the vocal server comprising:
- a plurality of customised directories (A₁, A₂, A₃, ...) with their associated voice recognition patterns (M₁, M₂, M₃, ...), each customised directory being assigned to a specific subscriber (U₁, U₂, U₃, ...),
- a permanent link (32) with a public directory (30),
- recognition patterns (22) associated with said public directory (20), **characterized in that** the vocal server comprises:
- means (12) to update each customised directory (A₁, A₂, A₃, ...) continually according to the incoming and outgoing calls of the corresponding subscriber (U₁, U₂, U₃, ...), or numbers indicated by the subscriber to be added or deleted,
- means (20) to update each customised directory (A₁, A₂, A₃, ...), relating to each party contained, according to changes in the data relating to said party contained in the public directory (30).

7. Voice server according to claim 6, wherein each customised directory (A₁, A₂, A₃, ...) is assigned to an individual subscriber (U₁, U₂, U₃, ...).

8. Voice server according to claim 6, wherein each customised directory (A₁, A₂, A₃, ...) is assigned to a legal entity subscriber (U₁, U₂, U₃, ...).
